# EUROPÄISCHE PATENTSCHRIFT

(11) **EP 2 548 768 B1**
(45) Veröffentlichungstag und Bekanntmachung des Hinweises auf die Patenterteilung: **07.08.2019**
(21) Anmeldenummer: 12004403.7
(22) Anmeldetag: 12.06.2012
(51) Int. Cl.: B60Q 1/14

(54) **Scheinwerfer für ein Kraftfahrzeug**
Headlamp for a motor vehicle
Phare pour un véhicule automobile

(30) Priorität: 22.07.2011 DE 102011108384
(43) Veröffentlichungstag der Anmeldung: 23.01.2013
(73) Patentinhaber: Audi AG, 85045 Ingolstadt (DE)
(72) Erfinder: Funk, Christian, 85080 Gaimersheim (DE); Huhn, Wolfgang, 85084 Reichertshofen (DE)
(74) Vertreter: Thielmann, Frank

(56) Entgegenhaltungen:
- EP-A2- 2 100 769
- DE-A1-102007 022 245
- DE-A1-102007 040 042
- DE-A1-102007 060 399
- DE-A1-102007 063 183
- DE-A1-102008 036 193
- DE-A1-102008 044 676
- DE-A1-102008 062 639
- US-A- 5 931 576
- US-A1- 2003 107 323
- US-A1- 2004 263 346

## Beschreibung

Die vorliegende Erfindung betrifft ein Kraftfahrzeug mit Scheinwerfer. Schließlich betrifft die vorliegende Erfindung ein Verfahren zum Betreiben eines Kraftfahrzeugs mit Scheinwerfer.

Bei modernen Kraftfahrzeugen werden zunehmend Scheinwerfer mit Leuchtdioden (LEDs) eingesetzt. Die Leuchtdioden zeichnen sich durch eine lange Lebensdauer, eine hohe Energieeffizienz und erweiterte Designmöglichkeiten aus. Diese LED-Scheinwerfer bringen allerdings den Nachteil mit sich, dass die Leuchtdioden mechanisch fest an das Kraftfahrzeug gekoppelt sind. Somit können die Leuchtdioden beispielsweise nicht wie bei einem prädikativen Kurvenlicht, das schwenkbare Scheinwerfer aufweist, bewegt werden. Somit ist auch eine absichtliche Beeinflussung des Blickverhaltens des Fahrers ist nicht möglich.

Die LED-Scheinwerfer können in mehrere Segmente unterteilt sein, welche jeweils üblicherweise mehrere Leuchtdioden umfassen. Insbesondere bei LED-Scheinwerfern mit denen eine Fernlichtfunktion bereitgestellt wird, ist es bekannt, entsprechende Segmente einem entgegenkommenden Fahrzeug zuzuordnen, das mit einer Kamera erfasst wurde. Hierbei können die entsprechenden Segmente ausgeschaltet werden, damit der Fahrer des erfassten Fahrzeugs nicht geblendet wird.

Die DE 10 2007 044 936 A1 betrifft eine Lichtanlage für ein Kraftfahrzeug bei der die Leuchtmittel zur Ausleuchtung, Beleuchtung oder Signalisierung verwendet werden. Das abgestrahlte Licht der Lichtanlage kann in dem Lichtstrom und/oder in der spektralen Zusammensetzung verändert werden. Durch eine Kodierung der Lichtstärke und/oder der spektralen Zusammensetzung kann eine Kommunikation mit fahrzeugexterne Sende- und Empfangseinheiten ermöglicht werden. Die Veränderung der Lichtstärke und/oder der spektralen Zusammensetzung erfolgt innerhalb einer so kurzen Zeitdauer, das sie von dem menschlichen Auge nicht wahrgenommen werden kann. Die DE 10 2010 006 296 A1 beschreibt ein Verfahren zur Fahrlichtsteuerung eines Fahrzeugs mit zumindest einem schwenkbaren Scheinwerfer. Hierbei können eine oder mehrere Lichtverteilungen, eine Leuchtweite, eine Ausleuchtcharakteristik und/oder ein horizontaler Schwenkwinkel zumindest eines Scheinwerfers angesteuert werden. Zudem ist es vorgesehen, dass einzelne Scheinwerfer entsprechen zu- oder abgeschaltet werden. DE 10 2008 036 193 A1 offenbart ebenfalls einen Kraftfahrzeugscheinwerfer.

In der DE 10 2007 060 399 A1 ist eine Beleuchtungseinrichtung mit wenigstens einem Scheinwerfer mit mehreren gesonderten, getrennt einzeln oder in Gruppen ein- und ausschaltbaren Modulen beschrieben, von denen wenigstens zwei Module unterschiedliche Raumwinkelverteilungen der Leuchtintensität aufweisen. Die Ansteuerung der Module kann dabei in Abhängigkeit eines prognostizierten Fahrwegs aufgrund von Daten eines Navigationssystems erfolgen.

Die Aufgabe der vorliegenden Erfindung ist es, einem Scheinwerfer für ein Kraftfahrzeug der eingangs genannten Art möglichst effektiv zu betreiben. Diese Aufgabe wird erfindungsgemäß gelöst durch ein Kraftfahrzeug mit Scheinwerfer gemäß Patentanspruch 1. Demnach wird bereitgestellt ein Scheinwerfer für ein Kraftfahrzeug mit einer Mehrzahl von Leuchtmitteln, wobei die Leuchtmittel in einer Matrix mit einer ersten Erstreckungsrichtung und einer dazu senkrechten, zweiten Erstreckungsrichtung angeordnet sind, und wobei für jedes der Leuchtmittel jeweils ein Wert der Leuchtdichte individuell einstellbar ist, und der Wert der Leuchtdichte des jeweiligen Leuchtmittels in Abhängigkeit von einer Position des Leuchtmittels entlang der ersten Erstreckungsrichtung und/oder der zweiten Erstreckungsrichtung mindestens einer vorgegebenen Verteilungsfunktion folgend einstellbar ist.

Die einzelnen Leuchtmittel in einem Scheinwerfer, insbesondre in einem Frontscheinwerfer für ein Kraftfahrzeug, werden hierbei individuell angesteuert. Somit können die durch die jeweiligen Leuchtmittel bereitgestellte Leuchtdichten flexibel angepasst werden. Ein solcher Scheinwerfer kann ebenso in mehrere Segmente unterteilt sein, in denen jeweils ein oder mehrere Leuchtmittel angeordnet sind. In diesem Fall kann der Scheinwerfer so ausgebildet sein, dass der Wert für die Leuchtdichte der Leuchtmittel für ein Segment gemeinsam angepasst werden kann. Ebenso ist des denkbar, dass der Wert für die Leuchtdichte bei jedem Leuchtmittel in einem Segment separat eingestellt werden kann. Auf diese Weise können einzelne Leuchtmittel des Scheinwerfers so angesteuert werden, dass einzelne von ihnen eine geringere Leuchtdichte aufweisen als die übrigen. Somit benötigen die Leuchtmittel weniger elektrische Energie und folglich kann der Scheinwerfer effektiver betrieben werden.

Die Werte der Leuchtdichte der jeweiligen Leuchtmittel werden so eingestellt bzw. angepasst, dass sie in Abhängigkeit von der Position entlang einer Erstreckungslinie des Scheinwerfers zumindest einer vorgegebenen Verteilungsfunktion folgen. Die Erstreckungslinie des Scheinwerfers kann beispielsweise eine im Bezug zu dem Scheinwerfer horizontale oder vertikale Erstreckungsrichtung sein. Ebenso ist jede andere Erstreckungsrichtung des Scheinwerfers denkbar. Die einzelnen Leuchtmittel können auch so angesteuert werden, dass die Werte der Leuchtdichte in Abhängigkeit der Position der Leuchtmittel entlang unterschiedlicher Erstreckungsrichtungen jeweils unterschiedlichen Verteilungsfunktionen folgen.

Erfindungsgemäß ist die vorgegebene Verteilungsfunktion eine diskretisierte Normalverteilung. Entspricht die vorgegebene Verteilungsfunktion einer Normalverteilung bzw. einer Gaußverteilung, weisen die jeweiligen Leuchtmittel oder Segmente in einem mittleren Bereich des Scheinwerfers eine höhere als am Rand bzw. die maximale Leuchtdichte auf. Der Wert der Leuchtdichte der Leuchtmittel verringert sich zum Randbereich des Scheinwerfers hin. Ebenso ist aber auch jede andere vorgegebene Verteilungsfunktion denkbar. Die Verteilungsfunktion kann ebenso mehrere Maxima aufweisen. Die Verteilungsfunktion ist so auszuwählen, dass sich für den Fahrer ein angenehmes Fahrgefühl ergibt und dass die Fahrbahn besonders gut ausgeleuchtet wird.

In einer weiteren Ausführungsform weisen die Leuchtmittel in einem ersten Bereich des Scheinwerfers, der durch ein Zentrum der Verteilungsfunktion gebildet ist, eine höhere Leuchtdichte auf als in einem an den ersten angrenzenden, zweiten Bereich des Scheinwerfers. Die einzelnen Leuchtmittel werden bevorzugt so angesteuert bzw. betrieben, dass die Werte ihrer Leuchtdichte in Abhängigkeit von ihrer Position in einem Zentrum der Verteilungsfunktion bzw. in einem Maximum der Verteilungsfunktion im Vergleich zu den Werten der Leuchtdichten der übrigen Leuchtmittel höher sind bzw. einen Maximalwert erreichen. Somit kann der gesamte Scheinwerfer durch die Ansteuerung der Leuchtmittel in zumindest zwei Bereiche mit unterschiedlichen Werten der Leuchtdichte der Leuchtmittel eingeteilt werden.

In einer weiteren Ausgestaltung der Erfindung sind jeweils mindestens zwei der Leuchtmittel in der ersten und in der zweiten Erstreckungsrichtung nebeneinander angeordnet. Der Scheinwerfer umfasst üblicherweise mehrere Leuchtmittel, die sowohl in einer ersten als auch in einer zweiten Erstreckungsrichtung des Scheinwerfers in einer Matrix angeordnet sind. Die Leuchtmittel sind somit entsprechend einer zweidimensionalen Matrix in dem Scheinwerfer angeordnet, wobei die einzelnen Leuchtmittel individuell angesteuert werden können. Auf diese Weise kann die von dem Scheinwerfer erzeugt Lichtverteilung besonders exakt angepasst werden.

In einer weiteren Ausführungsform ist jedes der Leuchtmittel mit einer elektrischen Strömstärke betreibbar, und der Wert der Leuchtdichte des jeweiligen Leuchtmittels ist durch eine Pulsweitenmodulation der elektrischen Stromstärke einstellbar. Der Wert der Leuchtdichte der jeweiligen Leuchtmittel kann auf besonders einfache Weise durch eine Pulsweitenmodulation der Stromstärke ermöglicht werden. Bevorzugt ist jedem Leuchtmittel eine entsprechende Elektronikeinheit zugeordnet, mit der eine Pulsweitenmodulation der elektrischen Strömstärke, mit der das Leuchtmittel betrieben wird, ermöglicht werden kann. Ebenso kann jedem Segment des Scheinwerfers, das mehrere Leuchtmittel umfasst, eine entsprechende Elektronikeinheit zugeordnet sein.

Besonders bevorzugt sind die Leuchtmittel Leuchtdioden. Üblicherweise werden Leuchtdioden verwendet, die ein weißes Licht erzeugen und welche für den Betrieb in einem Frontscheinwerfer eines Kraftfahrzeugs eingesetzt werden können. Die Leuchtdioden zeichnen sich durch ihre lange Lebensdauer und ihre Energieeffizienz aus.

Der Scheinwerfer ist bevorzugt ein Frontscheinwerfer des Kraftfahrzugs.

Das Kraftfahrzeug umfasst ein erstes Assistenzsystem, wobei die Verteilungsfunktion der Werte der Leuchtdichte der Leuchtmittel in dem Scheinwerfer in Abhängigkeit von einem Fahrbahnverlauf und/oder in Abhängigkeit von einem sich in einer Umgebung des Kraftfahrzeugs befindenden Objekts durch das erste Assistenzsystem verändert wird. Erfindungsgemäß wird ein prädikativer Fahrbahnverlauf durch ein Assistenzsystem des Kraftfahrzeugs bestimmt. Dies erfolgt erfindungsgemäß mit Hilfe eines Navigationssystems. Ebenso können vorausschauende Umfeldsensoren wie eine Kamera, ein Radarsensor, ein Lidarsensor oder dergleichen verwendet werden. Mit den Umfeldsensoren können ebenso Objekte bzw. Hindernisse erfasst werden, die sich auf und/oder neben der Fahrbahn befinden.

In Abhängigkeit von dem Fahrbahnverlauf und/oder einem erfassten Objekt kann die Verteilungsfunktion der Werte der Leuchtdichte der Leuchtmittel durch das Assistenzsystem angepasst werden. Hierzu kann die Lage des Zentrums der Verteilungsfunktion entsprechend angepasst werden. Mit anderen Worten wird derjenige Bereich in dem Scheinwerfer in Abhängigkeit von dem Fahrbahnverlauf und/oder dem erfassten Objekt verschoben, in dem die Leuchtmittel eine höhere oder die maximale Leuchtdichte aufweisen. Ebenso kann hierzu die Fläche des Bereichs vergrößert oder verkleinert werden, in dem die Leuchtmittel eine höhere oder die maximale Leuchtdichte aufweisen. Zudem kann sowohl die Lage als auch die Fläche dieses Bereichs von dem Assistenzsystem verändert werden. Auf diese Weise kann der von dem Scheinwerfer erzeugte Lichtstrahl so angepasst werden, dass der Fahrbahnverlauf besonders gut ausgeleuchtet wird. Somit kann die Funktionalität eines prädikativen Kurvenlichts ermöglicht werden. Des Weiteren können die Leuchtmittel anhand der Verteilungsfunktion so angesteuert werden, dass der Fahrer durch eine entsprechende Ausleuchtung auf Hindernisse hingewiesen wird. Schließlich können die Leuchtmittel in dem Scheinwerfer so angesteuert werden, dass die Fahrer entgegenkommender Fahrzeuge nicht geblendet werden. Auf diese Weise kann die Sicherheit sowohl für den Fahrer des Kraftfahrzeugs als auch für die übrigen Verkehrsteilnehmer deutlich erhöht werden.

In einer weiteren Ausführungsform weist das Kraftfahrzeug ein zweites Assistenzsystem auf, wobei die Verteilungsfunktion der Werte der Leuchtdichte der Leuchtmittel in dem Scheinwerfer in Abhängigkeit von einem Lenkwinkel, einer Gierrate, einer Neigung, einer Geschwindigkeit und/oder einer Beschleunigung des Kraftfahrzeugs durch das zweite Assistenzsystem verändert wird. Mit dem zweiten Assistenzsystem, welches beispielsweise die Daten von entsprechenden Fahrwerksensoren, Inertialsensoren, Drehratensensoren oder dergleichen empfängt, kann ebenso die Verteilungsfunktion der Werte der Leuchtdichte der Leuchtmittel verändert werden. Hierbei kann ebenso - wie bereits zuvor beschrieben - die Lage und/oder die Fläche des Zentrums der Verteilungsfunktion in dem Scheinwerfer entsprechend angepasst werden. Somit kann der von dem Scheinwerfer erzeugte Lichtstrahl in Abhängigkeit der Lenkbewegung des Fahrers angepasst werden. Zudem kann der Lichtstrahl an die Geschwindigkeit des Kraftfahrzeugs angepasst werden. Hierbei können die Sensoren genutzt werden, die üblicherweise in einem Kraftfahrzeug vorhanden sind.

Bevorzugt ist durch eine Steuereinrichtung des Kraftfahrzeugs eine Fernlichtfunktion und/oder eine Abblendlichtfunktion des Scheinwerfers bereitstellbar. Der zuvor beschriebene Scheinwerfer kann sowohl als Fernlichtscheinwerfer als auch als Abblendlichtscheinwerfer verwendet werden. Zu diesem Zweck umfasst das Kraftfahrzeug eine entsprechende Steuereinrichtung, mittels welcher die jeweiligen Leuchtmittel bzw. Leuchtdioden entsprechend angesteuert werden können.

Schließlich wird erfindungsgemäß bereitgestellt ein Verfahren zum Betreiben eines Scheinwerfers für ein Kraftfahrzeug, der eine Mehrzahl von Leuchtmittein umfasst, die Leuchtmittel in einer Matrix mit einer ersten Erstreckungsrichtung und einer dazu senkrechten, zweiten Erstreckungsrichtung angeordnet sind, durch Individuelles Einstellen eines Werts der Leuchtdichte für jedes der Leuchtmittel, wobei der Wert der Leuchtdichte des jeweiligen Leuchtmittels in Abhängigkeit von einer Position des Leuchtmittels entlang der ersten Erstreckungsrichtung und/oder der zweiten Erstreckungsrichtung mindestens einer vorgegebenen Verteilungsfunktion folgend eingestellt wird.

Die im Bezug auf den erfindungsgemäßen Scheinwerfer beschriebenen Weiterbildungen lassen entsprechend auf das Verfahren zum Betreiben eines Scheinwerfers übertragen.

Die vorliegende Erfindung wird nun anhand der beigefügten Zeichnungen näher erläutert. Dabei zeigen:
- Fig. 1: eine schematische Darstellung eines Scheinwerfers für ein Kraftfahrzeug,
- Fig. 2: einen Graph einer Verteilungsfunktion von Werten der Leuchtdichte von Leuchtmitteln in Abhängigkeit von einer Position der Leuchtmittel entlang einer Erstreckungsrichtung eines Scheinwerfers,
- Fig.3: einen Graph gemäß Fig. 2, bei dem das Maximum der Verteilungsfunktion verschoben ist, und
- Fig. 4: einen Graph gemäß Fig. 2 und 3, bei dem das Maximum der Verteilungsfunktion verschoben ist und die Verteilungsfunktion breiter ist.

Die nachfolgend näher geschilderten Ausführungsbeispiele stellen bevorzugte Ausführungsformen der vorliegenden Erfindung dar.

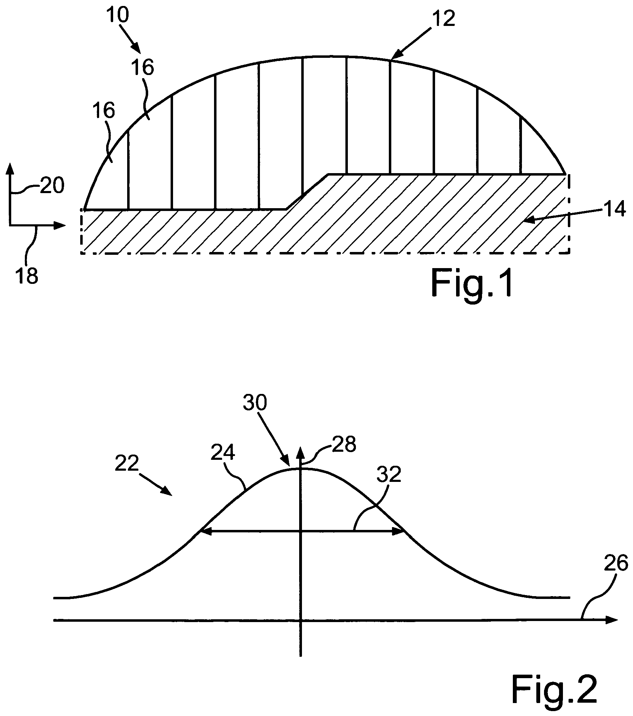

Fig. 1 zeigt in einer schematischen Darstellung die Draufsicht eines Scheinwerfers 10 für ein Kraftfahrzeug. Der Scheinwerfer 10 ist bevorzugt ein Frontscheinwerfer für ein Kraftfahrzeug. Der Scheinwerfer 10 umfasst einen Fernlichtscheinwerfer 12 und einen Abblendlichtscheinwerfer. In Fig. 1 ist nur der Fernlichtscheinwerfer 12 dargestellt. Die Position des Abblendlichtschienwerfers ist durch den schraffierten Bereich 14 verdeutlicht. Vorliegend erfolgt nur eine Beschreibung des Fernlichtscheinwerfers 12. Diese kann in eben solcher Weise auf den Abblendlichtscheinwerfer übertragen werden.

Der Scheinwerfer 10 ist in mehrere Segmente 16 unterteilt. Vorliegend umfasst der Scheinwerfer 10 beispielhaft zehn Segmente 16. Die Segmente 16 sind hier entlang einer ersten Erstreckungsrichtung 18 des Scheinwerfers 10 verteilt angeordnet. Die erste Erstreckungsrichtung 18 entspricht hier der horizontalen Erstreckung des Scheinwerfers 10. Ebenso kann jede andere Erstreckungsrichtung angenommen werden. Jedes der Segmente 16 umfasst ein oder mehrere hier nicht dargestellte Leuchtmittel. Diese Leuchtmittel sind bevorzugt Leuchtdioden, insbesondere weiße Leuchtdioden. Die Mehrzahl von Leuchtmittel ist in dem Scheinwerfer 10 üblicherweise in einer Matrix angeordnet. Die Matrix weist eine erste Erstreckungsrichtung 18 und eine dazu senkrechte, zweiten Erstreckungsrichtung 20 auf. Die Leuchtmittel können entweder entlang der ersten Erstreckungsrichtung 18 oder entlang der zweiten Erstreckungsrichtung 20 angeordnet sein. Bevorzugt sind jeweils mindestens zwei der Leuchtmittel in der ersten Erstreckungsrichtung 18 und in der zweiten Erstreckungsrichtung 20 nebeneinander angeordnet, so dass sich im dem Scheinwerfer 10 eine zweidimensionale Anordnung der Leuchtmittel ergibt.

Bei dem Scheinwerfer 10 ist für jedes der Leuchtmittel jeweils ein Wert der Leuchtdichte individuell einstellbar und der Wert der Leuchtdichte des jeweiligen Leuchtmittels kann in Abhängigkeit von einer Position des Leuchtmittels entlang der ersten Erstreckungsrichtung 18 und/oder der zweiten Erstreckungsrichtung 20 mindestens einer vorgegebenen Verteilungsfunktion 24 folgend eingestellt werden. Die Leuchtmittel werden mit einer elektrischen Strömstärke betrieben, wobei der Wert der Leuchtdichte des jeweiligen Leuchtmittels durch eine Pulsweitenmodulation der elektrischen Stromstärke einstellbar ist.

Fig. 2 zeigt einen Graph 22 einer Verteilungsfunktion 24. Die Abszisse 26 des Graphs 22 entspricht hierbei der Position der Leuchtmittel entlang der ersten Erstreckungsrichtung 18. Die Ordinate 28 des Graphs 22 entspricht dem Wert des Tastgrades der Pulsweitenmodulation der elektrischen Stromstärke, mit der die jeweiligen Leuchtmittel betrieben werden. Durch den Tastgrad der Pulsweitenmodulation kann der Wert der Leuchtdichte der jeweiligen Leuchtmittel angepasst werden. Die in Fig. 2 dargestellte Verteilungsfunktion 24 ist eine Normalverteilung bzw. eine Gaußverteilung. Ebenso ist aber auch jede andere Verteilungsfunktion denkbar.

Entsprechend der Verteilungsfunktion 24 werden diejenigen Leuchtmittel, deren Position sich in einem Zentrum 30 bzw. in einem Maximum der Verteilungsfunktion 24 befindet, so angesteuert, dass der Wert ihrer Leuchtdichte im Vergleich zu den Werten der Leuchtdichte der übrigen Leuchtmittel einen höheren Wert bzw. einen Maximalwert aufweist. Vorliegend befindet sich das Zentrum 30 der Verteilungsfunktion 24 in einem mittleren Bereich des Scheinwerfers 10. Der Wert der Leuchtdichte der jeweiligen Leuchtmittel nimmt von diesem mittleren Bereich zu den Randbereichen des Scheinwerfers 10 stetig ab. Die Verteilung der Werte der Leuchtdichte der jeweiligen Leuchtmittel in Abhängigkeit ihrer Position kann durch die Breite der Verteilungsfunktion 24 eingestellt werden. Im vorliegenden Beispiel, in dem die Verteilungsfunktion 24 eine Normalverteilung ist, entspricht die Breite der Verteilungsfunktion 24 der Standardabweichung der Normalverteilung. Diese ist in Fig. 1 durch den Pfeil 32 dargestellt.

Der durch den Scheinwerfer 10 bereitgestellte Lichtstrahl kann in Abhängigkeit von der Fahrsituation und/oder erfassten Sensordaten angepasst werden. Zu diesem Zweck kann das Kraftfahrzeug ein oder mehrere Assistenzsysteme umfassen. Mit einem ersten Assistenzsystem kann beispielsweise ein prädikativer Fahrbahnverlauf bestimmt werden. Dieser kann mit einem Navigationssystem oder mit vorausschauenden Umfeldsensoren bestimmt werden. Ebenso können Objekte oder Hindernisse auf und/oder neben der Fahrbahn erfasst werden. Des Weiteren kann das Kraftfahrzeug ein zweites Assistenzsystem umfassen, mit dem beispielsweise mittels entsprechender Sensoren ein Lenkwinkel, eine Gierrate, eine Neigung, eine Geschwindigkeit und/oder eine Beschleunigung des Kraftfahrzeugs erfasst wird.

In Abhängigkeit von dem prädikativen Fahrbahnverlauf, den erfassten Objekten und/oder den oben genannten Betriebsgrößen des Kraftfahrzeugs kann die Verteilungsfunktion 24 der Werte der Leuchtdichte der jeweiligen Leuchtmittel in Abhängigkeit von ihrer Position mit zumindest einem Assistenzsystem verändert werden.

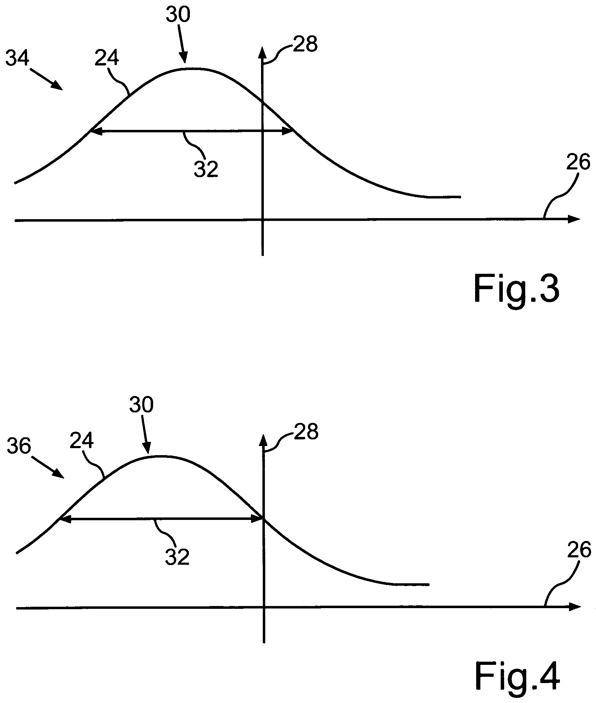

Fig. 3 zeigt einen Graph 34 einer Verteilungsfunktion 24 gemäß Fig. 1. Bei der hier dargestellten Verteilungsfunktion 24 ist das Zentrum 30 bzw. das Maximum der Verteilungsfunktion 24 im Vergleich zu der in Fig. 1 dargestellten Verteilungsfunktion 24 beispielhaft nach links verschoben. Durch diese Verschiebung des Zentrums 30 der Verteilungsfunktion 24 wird bewirkt, dass die Leuchtmittel in einem anderen Bereich des Scheinwerfers 10 eine höhere Leuchtdichte aufweisen. Somit kann beispielsweise erreicht werden, dass ein Kurvenverlauf einer Fahrbahn mit dem Scheinwerfer 10 entsprechend ausgeleuchtet wird. Ebenso kann durch die Verschiebung des Lichtschwerpunkts des Scheinwerfers erreicht werden, dass die Fahrer entgegenkommender Fahrzeuge durch den Scheinwerfer 10 nicht geblendet werden. Zudem kann die Lichtverteilung des Scheinwerfers10 an die Fahrsituation, z. B. an die Geschwindigkeit des Kraftfahrzeugs, angepasst werden.

Zudem kann anstelle der Position des Zentrums 30 der Verteilungsfunktion 24 auch die Breite der Verteilungsfunktion entsprechend vergrößert oder verkleinert werden, um den durch den Scheinwerfer 10 erzeugten Lichtstrahl entsprechend anzupassen. Ebenso kann sowohl das Zentrum 30 als auch die Breite der Verteilungsfunktion 24 angepasst werden. Fig. 4 zeigt einen Graph 36, bei dem das Zentrum 30 der Verteilungsfunktion 24 in Vergleich zu der Verteilungsfunktion 24 in Fig. 1 verschoben ist und zugleich die Breite der Verteilungsfunktion 24, die durch den Pfeil 32 dargestellt ist, geringer ist.

## Patentansprüche

1. Kraftfahrzeug mit Scheinwerfer (10), wobei der Scheinwerfer (10) umfasst:
- eine Mehrzahl von Leuchtmitteln, wobei
- die Leuchtmittel in einer Matrix mit einer ersten Erstreckungsrichtung (18) und einer dazu senkrechten, zweiten Erstreckungsrichtung (20) angeordnet sind,
- für jedes der Leuchtmittel jeweils ein Wert der Leuchtdichte individuell einstellbar ist, und
- der Wert der Leuchtdichte des jeweiligen Leuchtmittels in Abhängigkeit von einer Position des Leuchtmittels entlang der ersten Erstreckungsrichtung (18) und/oder der zweiten Erstreckungsrichtung (20) mindestens einer vorgegebenen Verteilungsfunktion (24) folgend einstellbar ist, und wobei
- das Kraftfahrzeug ein erstes Assistenzsystem umfasst
**dadurch gekennzeichnet, dass**
- das erste Assistenzsystem dazu ausgebildet ist, einen prädikativen Fahrbahnverlauf mit Hilfe eines Navigationssystems zu bestimmen und die Verteilungsfunktion (24) der Werte der Leuchtdichte der Leuchtmittel in dem Scheinwerfer (10) in Abhängigkeit von dem prädikativen Fahrbahnverlauf zu verändern, wobei
- die vorgegebene Verteilungsfunktion (24) eine diskretisierte Normalverteilung ist.

2. Kraftfahrzeug nach Anspruch 1,
**dadurch gekennzeichnet, dass**
die Leuchtmittel in einem ersten Bereich des Scheinwerfers, der durch ein Zentrum (30) der Verteilungsfunktion (24) gebildet ist, eine höhere Leuchtdichte aufweisen als in einem an den ersten angrenzenden, zweiten Bereich des Scheinwerfers (10).

3. Kraftfahrzeug nach einem der vorhergehenden Ansprüche,
**dadurch gekennzeichnet, dass**
jeweils mindestens zwei der Leuchtmittel in der ersten und in der zweiten Erstreckungsrichtung (18, 20) nebeneinander angeordnet sind.

4. Kraftfahrzeug nach einem der vorhergehenden Ansprüche,
**dadurch gekennzeichnet, dass**
jedes der Leuchtmittel mit einer elektrischen Strömstärke betreibbar ist, und der Wert der Leuchtdichte des jeweiligen Leuchtmittels durch eine Pulsweitenmodulation der elektrischen Stromstärke einstellbar ist.

5. Kraftfahrzeug nach einem der vorhergehenden Ansprüche,
**dadurch gekennzeichnet, dass**
die Leuchtmittel Leuchtdioden sind.

6. Kraftfahrzeug nach einem der vorhergehenden Ansprüche mit einem zweiten Assistenzsystem,
**dadurch gekennzeichnet, dass**
die Verteilungsfunktion (24) der Werte der Leuchtdichte der Leuchtmittel in dem Scheinwerfer (10) in Abhängigkeit von einem Lenkwinkel, einer Gierrate, einer Neigung, einer Geschwindigkeit und/oder einer Beschleunigung des Kraftfahrzeugs durch das zweite Assistenzsystem verändert wird.

7. Kraftfahrzeug nach einem der vorhergehenden Ansprüche,
**dadurch gekennzeichnet, dass**
durch eine Steuereinrichtung eine Fernlichtfunktion und/oder eine Abblendlichtfunktion des Scheinwerfers (10) bereitstellbar ist.

8. Verfahren zum Betreiben eines Kraftfahrzeugs mit Scheinwerfer (10), wobei der Scheinwerfer eine Mehrzahl von Leuchtmitteln umfasst, die Leuchtmittel in einer Matrix mit einer ersten Erstreckungsrichtung (18) und einer dazu senkrechten, zweiten Erstreckungsrichtung (20) angeordnet sind, wobei
- eine Wert der Leuchtdichte für jedes der Leuchtmittel eingestellt wird, und
- der Wert der Leuchtdichte des jeweiligen Leuchtmittels in Abhängigkeit von einer Position des Leuchtmittels entlang der ersten Erstreckungsrichtung (18) und/oder der zweiten Erstreckungsrichtung (20) mindestens einer vorgegebenen Verteilungsfunktion (24) folgend eingestellt wird,
**gekennzeichnet durch**,
- Bestimmen eines prädikativen Fahrbahnverlaufs durch ein erstes Assistenzsystem mit Hilfe eines Navigationssystems und Verändern der Verteilungsfunktion (24) der Werte der Leuchtdichte der Leuchtmittel in dem Scheinwerfer (10) in Abhängigkeit von dem prädikativen Fahrbahnverlauf durch das erste Assistenzsystem, wobei als die Verteilungsfunktion (24) eine diskretisierte Normalverteilung vorgegeben wird.

## Claims

1. Motor vehicle with headlight (10), wherein the headlight (10) comprises:
- a plurality of lighting means, wherein
- the lighting means are arranged in a matrix having a first extension direction (18) and a second extension direction (20) perpendicular thereto,
- for each of the lighting means respectively a value of luminance is individually adjustable, and
- the value of the luminance of the respective lighting means is adjustable as a function of a position of the lighting means along the first extension direction (18) and/or the second extension direction (20) following at least one predetermined distribution function (24), and wherein
- the motor vehicle comprises a first assistance system
**characterised in that**
- the first assistance system is designed to determine a predictive road course with the aid of a navigation system and to change the distribution function (24) of the values of the luminance of the lighting means in the headlight (10) as a function of the predictive road course, wherein
- the predetermined distribution function (24) is a discretised normal distribution.

2. Motor vehicle according to Claim 1,
**characterised in that**
the lighting means in a first region of the headlight, which is formed by a centre (30) of the distribution function (24), has a higher luminance than in a second region of the headlight (10) adjacent to the first.

3. Motor vehicle according to any one of the preceding claims,
**characterised in that**
at least two of the lighting means are respectively arranged adjacent to one another in the first and in the second extension direction (18, 20).

4. Motor vehicle according to any one of the preceding claims,
**characterised in that**
each of the lighting means is operable with an electric current, and the value of the luminance of the respective lighting means is adjustable by a pulse width modulation of the electric current.

5. Motor vehicle according to any one of the preceding claims,
**characterised in that**
the lighting means are light emitting diodes.

6. Motor vehicle according to any one of the preceding claims having a second assistance system,
**characterised in that**
the distribution function (24) of the values of the luminance of the lighting means in the headlight (10) is changed by the second assistance system as a function of a steering angle, yaw rate, inclination, speed and/or acceleration of the motor vehicle.

7. Motor vehicle according to any one of the preceding claims,
**characterised in that**
a high-beam function and/or a low-beam function of the headlight (10) can be provided by a control device.

8. Method of operating a motor vehicle with headlight (10), wherein the headlight comprises a plurality of lighting means, the lighting means being arranged in a matrix with a first extension direction (18) and a second extension direction (20) perpendicular thereto, wherein
- a value of luminance is set for each of the light sources, and
- the value of the luminance of the respective lighting means is set as a function of a position of the lighting means along the first extension direction (18) and/or the second extension direction (20) following at least one predetermined distribution function (24), **characterised by**
- determining a predictive road course by a first assistance system with the aid of a navigation system, and changing the distribution function (24) of the values of the luminance of the lighting means in the headlight (10) as a function of the predictive road course by the first assistance system, wherein a discretised normal distribution is given as the distribution function (24).

## Revendications

1. Véhicule automobile avec phare (10), dans lequel le phare (10) comprend :
- une pluralité de moyens d'éclairage, dans lequel
- les moyens d'éclairage sont agencés dans une matrice avec une première direction d'extension (18) et une deuxième direction d'extension (20) perpendiculaire à celle-ci,
- pour chacun des moyens d'éclairage respectivement une valeur de la luminance est réglable individuellement, et
- la valeur de la luminance du moyen d'éclairage respectif est réglable en fonction d'une position du moyen d'éclairage le long de la première direction d'extension (18) et/ou de la deuxième direction d'extension (20) en suivant au moins une fonction de distribution (24) prédéfinie, et dans lequel
- le véhicule automobile comprend un premier système d'assistance
**caractérisé en ce que**
- le premier système d'assistance est réalisé pour déterminer un tracé de chaussée prédictif à l'aide d'un système de navigation et modifier la fonction de distribution (24) des valeurs de la luminance des moyens d'éclairage dans le phare (10) en fonction du tracé de chaussée prédictif, dans lequel
- la fonction de distribution (24) prédéfinie est une distribution normale discrétisée.

2. Véhicule automobile selon la revendication 1,
**caractérisé en ce que**
les moyens d'éclairage présentent, dans une première zone du phare, qui est formée par un centre (30) de la fonction de distribution (24), une plus grande luminance que dans une deuxième zone du phare (10) adjacente à la première.

3. Véhicule automobile selon l'une quelconque des revendications précédentes,
**caractérisé en ce que**
respectivement au moins deux des moyens d'éclairage sont agencés l'un à côté de l'autre dans la première et dans la deuxième direction d'extension (18, 20).

4. Véhicule automobile selon l'une quelconque des revendications précédentes,
**caractérisé en ce que**
chacun des moyens d'éclairage peut fonctionner avec une intensité électrique, et la valeur de la luminance du moyen d'éclairage respectif est réglable par une modulation de largeur d'impulsions de l'intensité électrique.

5. Véhicule automobile selon l'une quelconque des revendications précédentes,
**caractérisé en ce que**
les moyens d'éclairage sont des diodes électroluminescentes.

6. Véhicule automobile selon l'une quelconque des revendications précédentes avec un deuxième système d'assistance,
**caractérisé en ce que**
la fonction de distribution (24) des valeurs de la luminance des moyens d'éclairage dans le phare (10) est modifiée en fonction d'un angle de braquage, d'un taux de lacet, d'une inclinaison, d'une vitesse et/ou d'une accélération du véhicule automobile par le deuxième système d'assistance.

7. Véhicule automobile selon l'une quelconque des revendications précédentes,
**caractérisé en ce que**
une fonction feux de route et/ou une fonction feux de croisement du phare (10) peut être fournie par un dispositif de commande.

8. Procédé pour faire fonctionner un véhicule automobile avec phare (10), dans lequel le phare comprend une pluralité de moyens d'éclairage, qui sont agencés dans une matrice avec une première direction d'extension (18) et une deuxième direction d'extension (20) perpendiculaire à celle-ci, dans lequel
- une valeur de la luminance est réglée pour chacun des moyens d'éclairage, et
- la valeur de la luminance du moyen d'éclairage respectif est réglée en fonction d'une position du moyen d'éclairage le long de la première direction d'extension (18) et/ou de la deuxième direction d'extension (20) en suivant au moins une fonction de distribution (24) prédéfinie,
**caractérisé par**
- la détermination d'un tracé de chaussée prédictif par un premier système d'assistance à l'aide d'un système de navigation et modification de la fonction de distribution (24) des valeurs de la luminance des moyens d'éclairage dans le phare (10) en fonction du tracé de chaussée prédictif par le premier système d'assistance,
dans lequel une distribution normale discrétisée est prédéfinie en tant que fonction de distribution (24).
